# NEUE EUROPÄISCHE PATENTSCHRIFT

(11) **EP 0 893 292 B2**
(45) Veröffentlichungstag und Bekanntmachung des Hinweises auf die Entscheidung über den Einspruch: **01.04.2009**
(45) Hinweis auf die Patenterteilung: 06.08.2003
(21) Anmeldenummer: 98110249.4
(22) Anmeldetag: 05.06.1998
(51) Int. Cl.: B60H 1/00

(54) **Heizungs- oder Klimaanlage für ein Kraftfahrzeug**
Heating or air conditioning installation for motor vehicles
Installation de chauffage ou de climatisation pour véhicule à moteur

(30) Priorität: 24.07.1997 DE 19731908
(43) Veröffentlichungstag der Anmeldung: 27.01.1999
(73) Patentinhaber: Behr GmbH & Co. KG, 70469 Stuttgart (DE)
(72) Erfinder: Beck, Oliver, Dipl.-Ing. (FH), 75392 Deckenpfronn (DE); Grömmer, Christian, 88719 Stetten (DE); Förster, Michael, Dipl.-Ing. (FH), 70439 Stuttgart (DE); Wöcht, Norbert, 73529 Schwäbisch Gmünd (DE)
(74) Vertreter: Wallinger, Michael

(56) Entgegenhaltungen:
- DE-A- 3 940 361
- DE-A- 4 422 120
- DE-A- 4 442 000
- DE-U- 29 504 860

## Beschreibung

Die Erfindung betrifft eine Heizungs- oder Klimaanlage für ein Kraftfahrzeug, mit dem einzelne Klimatisierungszonen des Fahrzeuginnenraums mit separat temperierbarer Luft versorgt werden können, gemäß dem Oberbegriff des Anspruchs 1.

Aus der FR 2717747 ist ein Klimatisierungssystem bekannt, mit dem die Temperatur der den verschiedenen Klimatisierungszonen, nämlich die Zonen "vorne rechts" (Beifahrersitz) und "vorne links" (Fahrersitz) sowie die Zonen "Fondraum links" und "Fondraum rechts", zugeführten Luft separat einstellbar ist. Dazu weist das Klimasystem zwei, jeweils die linke bzw. rechte Fahrzeughälfte versorgende Klimaanlagen auf. Mit jeder der Klimaanlagen können der Frontbereich und der Fondbereich mit unterschiedlich temperierter Luft versorgt werden. Dieses Klimatisierungssystem ist sehr aufwendig, da es zwei Klimaanlagen mit jeweils einem Gebläse, Verdampfer und Heizkörper und entsprechenden Luftleitungen aufweist. Das System ist daher entsprechend konstenungünstig und kann nur in Großraumfahrzeugen aufgrund des großen Platzbedarfs eingesetzt werden.

Aus der DE 39 40 361 ist eine Klimaanlage bekannt, mit der vier Klimatisierungszonen versorgt werden können. Bei dieser Klimaanlage werden Warm- und Kaltluft erzeugt und jeder Klimatisierungszone über separate Kanäle zugeführt. Im Bereich der in der jeweiligen Klimatisierungszone angeordneten Luftaustrittsöffnungen ist für jede Klimatisierungszone ein Mischraum vorgesehen, in dem unmittelbar vor Austritt in den Fahrzeuginnenraum Warm- und Kaltluft gemischt werden. Zwar können mit einer derartigen Klimaanlage mit nur einem Gebläse, einem Verdampfer und einem Heizkörper vier Klimatisierungszonen versorgt werden, jedoch benötigen die Luftkanäle einen erheblichen Bauraum, da für die Luftversorgung für jede Klimatisierungszone zwei Luftkanäle vorgesehen sein müssen, die jeweils in einen Mischraum münden. Weiter nachteilig ist, daß die Warm- und Kaltluft erst unmittelbar vor Austritt aus den Luftaustrittsdüsen vermischt werden, so daß häufig nur eine unzureichende Durchmischung auftritt und aus einer Luftaustrittsdüse heiße und kalte Luftmassen nebeneinander austreten.

Aus der US 5,016,704 ist eine Klimaanlage für Kraftfahrzeuge bekannt, mit der lediglich zwei Klimatisierungszonen, nämlich der Frontbereich und der Fondbereich unterschiedlich klimatisierbar sind. Stromabwärts des Verdampfers ist diese Klimaanlage zweigeteilt. In jedem Teilbereich wird über eine Luftklappe die Luftmenge geregelt, die durch den Heizkörper erwärmt wird oder an dem Heizkörper vorbeigeführt wird. Warm- und Kaltluft können sich stromabwärts des Heizkörpers mischen und werden den einzelnen Austrittsdüsen zugeführt. Nachteilig an dieser Klimaanlage ist, daß sie einen großen Bauraum benötigt und eine gute Luftdurchmischung nicht gewährleistet ist. Desweiteren sind nur zwei Zonen klimatisierbar.

Aus der DE 44 22 120 ist eine Klimaanlage bekannt, die eine Links-Rechts-Regelung aufweist. Um eine kompakte Bauweise zu erhalten, wird die Kaltluft seitlich am Wärmetauscher vorbeigeführt und hinter dem Wärmetauscher mit der Warmluft gemischt. Trotz der bereits kompakteren Bauweise ist der Bauraum dieser Klimaanlage aufgrund der stromabwärts des Wärmetauschers gelegenen Warmluftschwenkklappen, die eine Schwenkbewegung in den Mischraum ausführen, relativ groß. Weiter nachteilig ist, daß eine optimale Vermischung von Kalt- und Warmluft nicht gewährleistet ist, da durch die Warmluftschwenkklappe auch in ihrem geöffneten Zustand eine gewisse Trennung der kalten und warmen Luftmassen gegeben ist. Desweiteren ist diese Klimaanlage nicht dazu geeignet, mehr als zwei Klimatisierungszonen zu versorgen.

Ausgehend von diesem Stand der Technik ist es Aufgabe der Erfindung, eine verbesserte Heizungs- oder Klimaanlage bereitzustellen, die einfach aufgebaut ist, einen geringen Bauraum ermöglicht und mit der mehrere Klimatisierungszonen unterschiedlich temperierte Luft zuführbar ist. Trotz des geringen Bauraums soll in der Heizungs- oder Klimaanlage eine optimale Vermischung von Kalt- und Warmluft erfolgen, so daß die in einer jeweiligen Klimatisierungszone aus Luftaustrittsöffnungen austretende Luft strähnenfrei ist, d.h. die austretende Luft muß über den Austrittsquerschnitt hinweg eine konstante Temperatur aufweisen.

Diese Aufgabe wird erfindungsgemäß gelöst durch eine gattungsgemäße Heizungs- oder Klimaanlage mit den kennzeichnenden Merkmalen des Anspruchs 1.

Wenn erfindungsgemäß jedem Mischraum wenigstens zwei der Luftstromsteuerelemente zugeordnet sind, von denen eines als Kaltluftklappe in dem Kaltluftkanal angeordnet ist und ein zweites als unmittelbar an der Austrittsseite des Heizkörpers angeordnete Warmluftsteuerelement ausgebildet ist, können der Kaltluftstrom und der Warmluftstrom separat voneinander geregelt werden, wodurch eine optimale Temperaturregelung der Luft in dem jeweiligen Mischraum möglich ist. Weiter ist erfindungsgemäß das Warmluftsteuerelement aus mehreren, an sich bekannten (beispielsweise aus der DE 41 19 474), jalousieartig angeordnete Lamellen aufgebaut, die in ihrer Schließstellung einen dem jeweiligen Mischraum zugeordneten Teilbereich der Austrittsseite des Heizkörpers abdecken. Durch diese Ausgestaltung der Warmluftsteuerelemente kann erheblich Bauraum gespart werden. Weiter ragen diese jalousieartigen Warmluftsteuerelemente nicht wie die bekannten Warmluftschwenkklappen in den Mischraum hinein, so daß eine bessere Vermischung der Kaltluft mit der aus dem Heizkörper austretenden Warmluft gewährleistet ist.

Jedem Mischraum ist ein derartiges, jalousieartiges Warmluftsteuerelement zugeordnet, so daß auf engstem Bauraum bevorzugt vier einzelne Mischräume vorgesehen sein können. Damit können vier Klimatisierungszonen, beispielsweise, Fahrerbereich, Beifahrerbereich und Fondbereich links und rechts von der erfindungsgemäßen Heizungs- oder Klimaanlage versorgt werden.

Damit jedem Mischraum auch separat dosierbar Kaltluft zugeführt werden kann, ist gemäß Anspruch 3 vorgesehen, daß jeder der beiden Kaltluftkanäle zweigeteilt ist.

Wenn die Kaltluftklappe im Bereich eines Kaltluftkanalausgangs, also in der Nähe des Mischraums angeordnet ist und in ihrer Offenstellung eine Luftleitfunktion ausübt, kann die Kaltluft vorteilhafterweise in Richtung auf die Warmluft gelenkt werden, wodurch eine bessere Vermischung gewährleistet ist. Dazu weist die Kaltluftklappe bevorzugt eine gebogene Form auf.

In gleicher Weise ist es vorteilhaft, wenn die Warmluftsteuerelemente mit ihren Lamellen zum Kaltluftkanal hin öffnen, so daß die Lamellen in ihrer Offenstellung die Warmluft zur Seite hin, in Richtung auf die Kaltluft lenken.

Für Kraftfahrzeuge mit verbrauchsarmen Verbrennungsmotoren, die nur wenig Abwärme erzeugen, ist es vorteilhaft, wenn der Heizkörper neben einem mit Kühlmittel für den Motor durchströmten Wärmetauscher einen parallel dazu angeordneten Zusatzheizkörper, der vorzugsweise elektrische Heizelemente, wie PTC-Heizelemente aufweist, vorgesehen ist. Dann kann bereits in der Warmlaufphase des Motors bzw. bei extrem kalter Witterung stets ausreichend warme Luft dem Fahrzeuginnenraum zugeführt werden.

Wenn jeweils zwei benachbarte Warmluftsteuerelemente miteinander koppelbar sind, sowie die zugehörigen Kaltluftklappen miteinander koppelbar sind, kann in einfachster Weise aus der erfindungsgemäßen Klimaanlage für vier Klimatisierungszonen eine Heizungs- oder Klimaanlage für lediglich zwei Klimatisierungszonen gebildet werden. Dazu müssen lediglich die entsprechenden Warmluftsteuerelemente und Kaltluftklappen gekoppelt werden und entsprechende Aktuatoren für die angekoppelten Warmluftsteuerelemente und Kaltluftklappen können entfallen. Auf diese Weise ist die erfindungsgemäße Heizungs- oder Klimaanlage sehr flexibel einsetzbar und kann ohne Mehrkosten, also ohne zusätzliche Konstruktion oder neue Werkzeuge sowohl in Fahrzeugen eingesetzt werden, in denen lediglich zwei Klimatisierungszonen vorgesehen sind, als auch in Fahrzeugen, in denen vier Klimatisierungszonen vorgesehen sind.

Im folgenden wird die Erfindung anhand eines Ausführungsbeispiels unter Bezugnahme auf die Zeichnung im einzelnen erläutert.

In der Zeichnung zeigen:

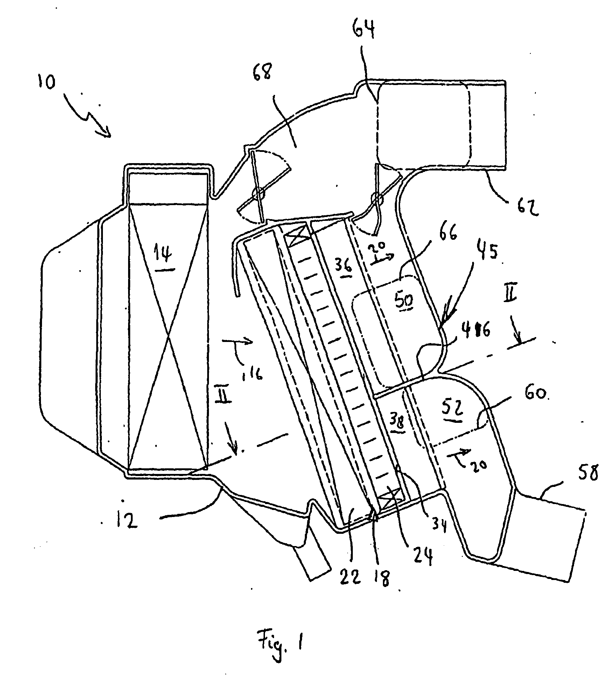

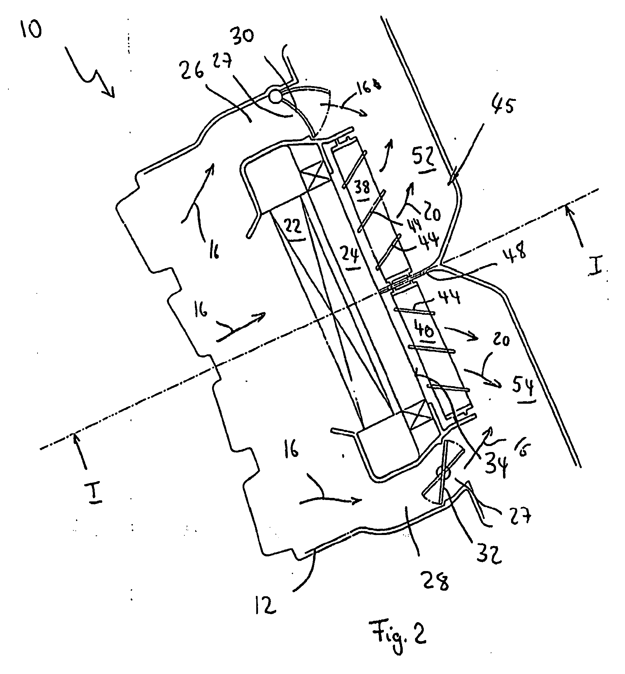

Fig. 1, 2 Querschnitte der erfindungsgemäßen Heizungsoder Klimaanlage.

Eine in der Zeichnung dargestellte, erfindungsgemäße Heizungs- oder Klimaanlage 10 weist ein nicht dargestelltes Gebläse und einen in einem Gehäuse 12 angeordneten Verdampfer 14 zur Erzeugung von Kaltluft 16 auf. In Strömungsrichtung hinter dem Verdampfer 14 ist ein Heizkörper 18 zur Erzeugung von Warmluft 20 angeordnet. Der Heizkörper 18 umfaßt einen mit Kühlmittel für das Antriebsaggregat des Kraftfahrzeugs durchströmbaren Wärmetauscher 22 und optional einen parallel dazu angeordneten Zusatzheizkörper 24, der vorzugsweise elektrische Heizelemente, wie PTC-Heizelemente, aufweist.

Wie in Fig. 2 zu erkennen, sind seitlich des Heizkörpers 18 Kaltluftkanäle 26 und 28 vorgesehen, die über Kaltluftklappen 30 und 32 verschließbar sind. Die Kaltluftkanäle 26 und 28 sind bevorzugt jeweils zweigeteilt entlang einer weiter unten beschriebenen Ebene.

In Strömungsrichtung anschließend sind unmittelbar an einer Austrittsseite 34 des Heizkörpers 18 Warmluftsteuerelemente 36, 38, 40 vorgesehen. Jedes Warmluftsteuerelement weist mehrere, jalousieartig angeordnete Lamellen 44 auf, die zur Bildung eines der Warmluftsteuerelemente über eine nicht dargestellte Kopplung gemeinsam parallel verschwenkbar sind. In ihrer Schließstellung decken die Lamellen 44 eines Warmluftsteuerelements 36, 38 oder 40 eine zugeordneten Teilbereich der Austrittsseite 34 des Heizkörpers 18 ab.

In Strömungsrichtung anschließend an die Warmluftsteuerelemente 36 bis 40 ist ein Luftmischraum 45 vorgesehen, in den die in dem Heizkörper 18 erwärmte Warmluft 20 und die im Kaltluftkanal 26 oder 28 an dem Heizkörper 18 vorbeigeführte Kaltluft 16 eintritt und vermischt wird, um Luft mit einer gewünschten Temperatur zu erhalten.

Der Luftmischraum 45 ist durch wenigstens eine, bevorzugt mehrere Trennwände 46 und 48 in einzelne Mischräume, im dargestellten Ausführungsbeispiel vier Mischräume 50, 52, 54 und 56, von denen in der zeichnerischen Darstellung nur drei, nämlich die mit den Bezugsziffern 50, 52 und 54, zu sehen sind, geteilt. Jedem der Mischräume 50 bis 56 ist eines der Warmluftsteuerelemente 36 bis 42 zugeordnet und in jeden der Mischräume 50 bis 56 mündet einer der vier Kaltluftkanäle. Die Kaltluftkanäle 26 und 28 sind damit entlang der Schnittlinie II-II in je zwei Teilkaltluftkanäle geteilt, wobei jeder der Teilkaltluftkanäle mit einer der Kaltluftklappen 30 oder 32 verschließbar ist. Die vier Warmluftsteuerelemente und die vier Kaltluftklappen sind separat über ein Steuergerät ansteuerbar. Auf diese Weise kann die Lufttemperatur in jedem Mischraum separat eingestellt werden, so daß vier Klimatisierungszonen unterschiedlich temperierte Luft zugeführt werden kann.

Die Kaltluftklappen 30 und 32 sind bevorzugt an einem Kaltluftkanalausgang 27 angeordnet. Dann können die Kaltluftklappen 30 und 32 eine Luftleitfunktion ausüben und die in den jeweiligen Mischraum eintretende Kaltluft 16 in Richtung auf die durch die Warmluftsteuerelemente 36 bis 42 hindurchtretende Warmluft 20 lenken. Dieser Effekt wird durch eine bevorzugt gebogene oder gekrümmte Form der Kaltluftklappe, wie in Fig. 2 bei der Kaltluftklappe 30 gezeigt, verstärkt. In gleicher Weise wird die Warmluft 20 in Richtung auf die einmündende Kaltluft 16 gelenkt, indem die Lamellen 44 der Warmluftsteuerelemente 36 bis 40 zur Seite, also zum Kaltluftkanal 26 oder 28, hin öffnen und in ihrer Offenstellung in Richtung Kaltluftkanal 26 oder 28 geneigt sind, wie in Fig.2 gezeigt.

Von den Mischräumen 50 bis 56 zweigen Luftleitkanäle 58 bis 66 ab, die jeweils die temperierte Mischluft zu nicht dargestellten Austrittsöffnungen, die in den entsprechenden Klimatisierungszonen liegen, führen.

Oberhalb des Heizkörpers 18 kann über einen Bypass 68 (Fig.1) Kaltluft über die Luftkanäle 62 und 64 unmittelbar direkt einer Mittel- und Seitendüsen, die im Armaturenbrett vorgesehen sind, zugeführt werden.

In einem weiteren, nicht dargestellten Ausführungsbeispiel können benachbarte Warmluftsteuerelemente, beispielsweise diejenigen, die die Warmluft für Front- und Fondbereich steuern, also z.B. die Warmluftsteuerelemente 36 und 38, miteinander gekoppelt werden. Gleichzeitig können die benachbarten Kaltluftklappen der Teilkaltluftkanäle des Kaltluftkanals 26 bzw. 28 miteinander gekoppelt werden. Die gekoppelten Warmluftsteuerelemente bzw. Kaltluftklappen brauchen dann nur von jeweils einem Aktuator angetrieben werden. Bei einer derartigen Kopplung ist dann lediglich eine Links-Rechts-Regelung mit der erfindungsgemäßen Heizungs- oder Klimaanlage möglich.

## Patentansprüche

1. Heizungs- oder Klimaanlage für ein Kraftfahrzeug, mit einem Heizkörper (18) zur Erzeugung von Warmluft (20), mit wenigstens zwei jeweils seitlich an dem Heizkörper (18) vorbeigeführten Kaltluftkanälen (26 und 28), mit einem in Strömungsrichtung anschließend an den Heizkörper (18) vorgesehenen Luftmischraum (44), der durch wenigstens eine Trennwand (46; 48) in einzelne Mischräume (50 bis 56) geteilt ist, in denen Luft durch Luftstromsteuerelemente (30, 32 und 36 bis 40) jeweils auf eine bestimmte Temperatur mischbar ist und von dort einer zugeordneten Klimatisierungszone über jeweils wenigstens einen Luftkanal (58 bis 66) und über jeweils wenigstens eine Luftaustrittsdüse zuführbar ist, **dadurch gekennzeichnet, daß** jedem Mischraum (50 bis 56) wenigstens zwei der Luftstromsteuerelemente (30 und 36, 38; bzw. 32 und 40) zugeordnet sind, von denen eines als um eine Achse Schwenkbare Kaltluftklappe (30 bzw. 32) in dem Kaltluftkanal (26 bzw. 28) angeordnet ist und ein zweites als unmittelbar an und parallel zu einer Austrittsseite (34) des Heizkörpers (18) angeordnetes Warmluftsteuerelement (36, 38, 40) ausgebildet ist, wobei das Warmluftsteuerelement (36, 38, 40) mehrere an sich bekannte, jalousieartig angeordnete Lamellen (44) aufweist, die in ihrer Schließstellung den dem jeweiligen Mischraum (50, 52, 54, 56) zugeordneten Teilbereich der Austrittsseite (34) des Heizkörpers (18) abdecken.

2. Heizungs- oder Klimaanlage nach Anspruch 1, **dadurch gekennzeichnet, daß** der Luftmischraum (18) in vier einzelne Mischräume (50 bis 56) geteilt ist.

3. Heizungs- oder Klimaanlage nach Anspruch 1 oder 2, **dadurch gekennzeichnet, daß** jeder Kaltluftkanal (26 und 28) zweigeteilt ist und jeder der dann erhaltenen vier Kaltluftkanäle in jeweils einen Mischraum (50, 52, 54, 56) mündet.

4. Heizungs- oder Klimaanlage nach einem der vorhergehenden Ansprüche, **dadurch gekennzeichnet, daß** die Kaltluftklappe (30, 32) im Bereich eines Kaltluftkanalausgangs (27) angeordnet ist und in ihrer Offenstellung eine Luftleitfunktion ausübt und die Kaltluft (16) in Richtung auf die Warmluft (20) lenkt.

5. Heizungs- oder Klimaanlage nach Anspruch 4, **dadurch gekennzeichnet, daß** die Kaltluftklappe (30) eine gebogene Form aufweist.

6. Heizungs- oder Klimaanlage nach einem der vorhergehenden Ansprüche, **dadurch gekennzeichnet, daß** die Warmluftsteuerelemente (36 bis 40) zum Kaltluftkanal (26 oder 28) hin öffnen und die Lamellen (44) in ihrer Offenstellung eine Luftleitfunktion ausüben und die Warmluft (20) zur Seite hin, in Richtung auf die Kaltluft (16) lenken.

7. Heizungs- oder Klimaanlage nach einem der vorhergehenden Ansprüche, **dadurch gekennzeichnet, daß** der Heizkörper (18) einen mit Kühlmittel für das Antriebsaggregat des Kraftfahrzeugs durchströmbaren Wärmetauscher (22) aufweist und einen parallel dazu angeordneten Zusatzheizkörper (24), der vorzugsweise elektrische Heizelemente aufweist.

8. Heizungs- oder Klimaanlage nach einem der vorhergehenden Ansprüche 2 bis 6, **dadurch gekennzeichnet, daß** jeweils zwei benachbarte Warmluftsteuerelemente (36 und 38) und zwei benachbarte Kaltluftklappen koppelbar sind.

## Claims

1. Heating and air-conditioning unit for a vehicle, with one heater (18) for producing hot air (20), with at least two cold air conduits (26 and 28) that run laterally to the heater (18), with an air mixing space (44) provided following on, in the direction of flow, from the heater (18), the said mixing space (44) being divided up by at least one partition (46; 48) into separate mixing spaces (50 to 56) in which air can, in each case, be mixed by airflow control elements (30, 32 and 36 to 40) to a certain temperature, and from which air can be supplied to an associated air-conditioning zone, via in each case at least one air conduit (58 to 66), and can be guided by means, in each case, of at least one air outlet jet, **characterized in that** each mixing space (50 to 56) has at least two of the airflow control elements (30 and 36, 38; or 32 and 40) assigned to it, one of which is disposed in the cold air conduit (26 or 28) as a cold air flap (30 or 32), pivoting about an axle and a second is developed as a hot air control-element (36, 38, 40) disposed immediately on and in parallel with the outlet side (34) of the heater (18), whereby the hot air control-element (36, 38, 40) has several known laminations (44), disposed on it like shutters, that, in their closed position, cover the sub-area, of the delivery side (34) of the heater (18) associated with the given mixing space (50, 52, 54, 56).

2. Heating or air-conditioning in accordance with claim 1, **characterized in that** the air mixing space (18) is divided up into four separate mixing spaces (50 to 56).

3. Heater or air-conditioning unit in accordance with claims 1 or 2, **characterized in that** each cold air conduit (26 and 28) is divided and each of the four cold air conduits thereby contained open, in each case, into a mixing space (50, 52, 54, 56).

4. Heater or air-conditioning unit in accordance with one of the preceding claims, **characterized in that,** the cold air (30, 32) is disposed in the area of a cold air outlet (27) and, in its open position, has an air-guiding function and guides the cold air (16) in the direction of the hot air (20).

5. Heater or air-conditioning unit in accordance with claim 4, **characterized in that,** the cold air flap (30) is arched in form.

6. Heater or air-conditioning unit in accordance with one of the preceding claims, **characterized in that,** the hot air control-elements (36 to 40) open towards the cold air conduit (26 or 28) and the laminations (44), in their open setting, exercise an air-guiding function and guide the hot air (20) laterally in the direction of the cold air (16).

7. Heater or air-conditioning unit in accordance with one of the preceding claims, **characterized in that,** the heater (18) has a heat exchanger (22) through which coolant can flow for the drive unit of the vehicle, and an additional heater (24), disposed parallel to the said heat exchanger, that preferably has electrical heating elements.

8. Heater or air-conditioning unit in accordance with one of the preceding claims 2 to 6, **characterized in that,** two given adjacent hot air control-elements (36 and 38), and two adjacent cold air flaps, can be connected.

## Revendications

1. Système de chauffage ou de climatisation pour véhicule à moteur, avec un radiateur (18) pour la production de l'air chaud (20), avec au moins deux conduits d'air froid (26 et 28) qui longent le radiateur (18) sur le côté, sachant qu'une chambre de brassage (44) est prévue à la sortie du radiateur (18) dans le sens du courant, laquelle est divisée en plusieurs chambres de brassage (50 à 56) distinctes à l'aide d'au moins une cloison (46, 48), l'air y étant brassé à une température définie à l'aide d'éléments de commande de l'écoulement d'air (30, 32 et 36 à 40) pour ensuite être dirigé vers une zone de climatisation déterminée à l'aide d'au moins un des conduits d'aération (58 à 66) où de l'une des buses de sortie d'air, **caractérisé par le fait qu'**à chaque chambre de brassage (50 à 56) sont affectés au moins deux éléments de commande de l'écoulement d'air (30 et 36, 38, ou 32 et 40), l'un consistant en un volet d'air froid (30 ou 32) basculant autour d'un axe et disposé dans le conduit d'air froid (26 ou 28), et l'autre en un élément de commande de l'écoulement d'air chaud (36, 38, 40) à proximité du et parallèle au côté de sortie (34) du radiateur (18), sachant que l'élément de commande de l'écoulement d'air chaud (36, 38, 40) a plusieurs lamelles (44), connues par ailleurs, et disposées comme pour des stores, lesquelles recouvrent le secteur précis du côté de sortie (34) du radiateur (18) affecté à chaque chambre de brassage (50, 52, 54 56).

2. Système de chauffage ou de climatisation selon la revendication 1, **caractérisé en ce que** la chambre réservée au brassage de l'air (18) est scindée en quatre chambres de brassage distinctes (50 à 56).

3. Système de chauffage ou de climatisation selon les revendications 1 ou 2, **caractérisé en ce que** chaque conduit d'air froid (26 et 28) est scindé en deux, et que chacun des quatre conduits d'air froid ainsi obtenus débouche dans une des chambres de brassage respectives (50, 52, 54, 56).

4. Système de chauffage ou de climatisation selon l'une des revendications précédentes, **caractérisé en ce que** le volet d'air froid (30, 32) est disposé dans la zone de sortie d'un conduit d'air froid (27) et exerce une fonction de conduite de l'air lorsqu'il est en position ouverte, afin de diriger le courant d'air froid (16) en direction du courant d'air chaud (20).

5. Système de chauffage ou de climatisation selon la revendication 4, **caractérisé en ce que** le volet d'air froid (30) est de forme courbe.

6. Système de chauffage ou de climatisation selon l'une des revendications précédentes, **caractérisé en ce que** les éléments de commande de l'écoulement d'air chaud (36 à 40) s'ouvrent en direction du conduit d'air froid (26 ou 28), et que les lamelles (44) exercent une fonction de conduction du courant d'air lorsqu'elles sont en position ouverte, afin de diriger l'air chaud (20) sur le côté, en direction de l'air froid (16).

7. Système de chauffage ou de climatisation selon l'une des revendications précédentes, **caractérisé en ce que** le radiateur (18) dispose d'un échangeur thermique (22) parcouru par un agent réfrigérant du groupe propulseur du véhicule à moteur, ainsi que d'un radiateur additionnel (24) disposé en parallèle, ayant des éléments de chauffage essentiellement électriques.

8. Système de chauffage ou de climatisation selon l'une des revendications précédentes 2 à 6, **caractérisé en ce que** respectivement deux éléments de commande de l'écoulement d'air chaud (36 et 38) et deux volets d'air froid, situés à proximité l'un de l'autre, peuvent être couplés.
